# FASCICULE DE BREVET EUROPEEN

(11) **EP 4 363 744 B1**
(45) Date de publication et mention de la délivrance du brevet: **09.09.2026**
(21) Numéro de dépôt: 22747077.0
(22) Date de dépôt: 28.06.2022
(51) Int. Cl.: F16H 57/04, F01D 25/18, F02C 7/06

(54) **LUBRIFICATION DE PALIERS D'UN ARBRE DE TURBOMACHINE**
SCHMIERUNG VON LAGERN EINER TURBOMASCHINENWELLE
LUBRICATION OF BEARINGS OF A TURBOMACHINE SHAFT

(30) Priorité: 01.07.2021 FR 2107150
(43) Date de publication de la demande: 08.05.2024
(73) Titulaire: Safran Power Units, 31200 Toulouse (FR)
(72) Inventeur: QUINTON, Romain, 77550 MOISSY-CRAMAYEL (FR); COT, Serge Marie Gabriel, 77550 MOISSY-CRAMAYEL (FR); LOPEZ, Jean-Paul Salvador, 77550 MOISSY-CRAMAYEL (FR)
(74) Mandataire: Ernest Gutmann - Yves Plasseraud S.A.S.
(86) Numéro de dépôt international: PCT/FR2022/051288
(87) Numéro de publication internationale: WO 2023/275487

(56) Documents cités:
- EP-A2- 1 662 095
- WO-A1-2012/168649
- FR-A1- 3 031 786

## Description

### Domaine technique de l'invention

La présente invention concerne la lubrification des parties tournantes dans les turbines à gaz, en particulier la lubrification des paliers portant un arbre des turbines à gaz.

### Etat de la technique antérieure

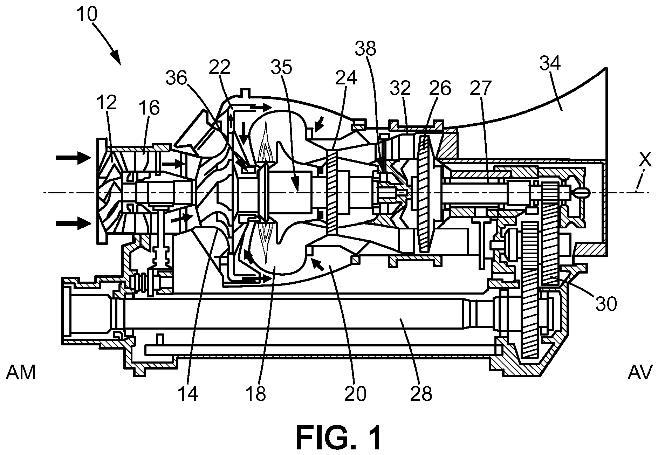

Un exemple de turbine à gaz est représenté à la figure 1 sur laquelle l'amont (AM) et l'aval (AV) de la structure suivant un axe moteur, soit l'axe longitudinal X ci-après, sont situés respectivement à gauche et à droite de la figure 1. La turbine à gaz 10 comprend, axialement en partie amont, un compresseur axial 12 suivi d'un compresseur radial 14. Une rangée annulaire d'aubes de stator 16 est agencée entre le compresseur axial 12 et le compresseur radial 14 pour redresser un flux d'air en sortie du compresseur axial 12. La turbine à gaz 10 comprend en outre une chambre de combustion 18 qui est refroidie par le flux d'air 20 en sortie du compresseur radial 14 et qui est diffusé autour de la chambre de combustion 18 par le diffuseur 22. Les gaz chauds en sortie de la chambre de combustion 18 entrainent à leur tour une turbine haute pression 24 portée par un arbre d'entrainement 35. Cette turbine haute pression 24 est reliée par l'arbre d'entrainement 35 aux compresseurs axial et radial et entraine leur rotation. Les gaz chauds en sortie de la chambre de combustion 18 entrainent aussi en rotation une turbine libre 26 séparée de la turbine haute pression 24. La turbine libre 26 comprend plusieurs étages de rangées annulaires d'aubes mobiles entrainant la rotation d'un arbre de turbine 27 qui est relié par un boitier réducteur 30 à un arbre de sortie 28. L'arbre de sortie 28 est entrainé en rotation par l'arbre de turbine 27 et peut par exemple être relié à un rotor d'un hélicoptère équipé de la turbine à gaz 10. L'arbre de sortie 28 est déporté par rapport aux parties chaudes de la turbine à gaz soit la chambre de combustion et les turbines 24 et 28. La turbine à gaz 10 comprend aussi une autre rangée annulaire d'aubes de stator 32 agencée en aval de la turbine libre 26 et configurée pour redresser le flux d'air en sortie de la turbine haute pression 24. Les gaz chauds en sortie de la turbine libre 26 sont évacués par une tuyère 34 agencée à l'extrémité aval de la turbine à gaz 10. L'arbre d'entrainement 35 est guidé en rotation par un palier amont 36 et un palier aval 38. Ces paliers assurent le maintien en position radiale et longitudinale de l'arbre tout en assurant sa rotation.

Les paliers 36 et 38 sont situés à proximité respectivement de la chambre de combustion 18 et de la turbine 24 dans laquelle circulent les gaz chauds. Les paliers 36 et 38 sont ainsi soumis à des températures élevées et nécessitent une lubrification efficace pour le graissage des éléments roulants des paliers et pour l'évacuation des calories. L'huile de lubrification passe donc dans une zone à une température élevée pour arriver aux paliers 36 et 38, ce qui peut poser des problèmes de protection thermique et d'encombrement associé, et par ailleurs entraîner des risques de cokéfaction de l'huile. En outre, l'accès aux paliers 36 et 38 est difficile en raison de l'encombrement autour de l'arbre d'entrainement 35.

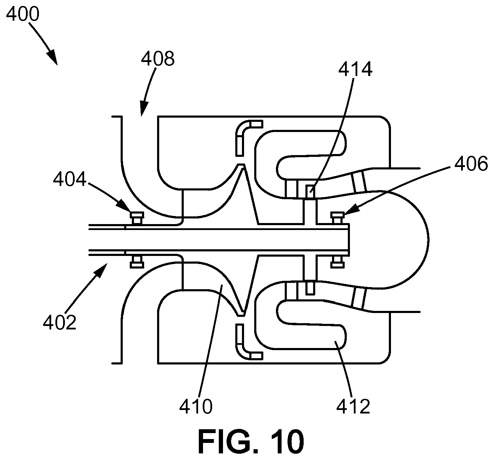

La figure 10 illustre un autre exemple dans lequel l'acheminement de lubrifiant est soumis à de fortes températures. La figure 10 représente un groupe auxiliaire de puissance (APU) 400, comprenant un arbre de turbine 402 commun à une turbine 414 et à un compresseur 410 et guidé en rotation par des paliers 404 et 406. L'APU 400 comprend une entrée d'air 408 desservant le compresseur 410. L'air comprimé en sortie du compresseur est dirigé vers une chambre de combustion 412 qui produit en sortie des gaz chauds. Ces derniers entrainent l'arbre de turbine 402 à travers la turbine 414.

Le palier 406 est entouré par la sortie des gaz chauds et par le fond de la chambre de combustion 412.

L'huile de lubrification des paliers 404 et 406 est amenée depuis une zone située radialement à l'extérieur des sources chaudes, par exemple en passant par un bras reliant le corps externe, ou carter extérieur, de la turbine aux éléments de maintien des bagues extérieures des éléments de roulement. L'huile de lubrification passe donc dans des zones de température élevée pour arriver aux paliers 404 et 406, ce qui peut poser des problèmes d'efficacité du refroidissement des bagues et d'encombrement à proximité de l'arbre. En outre l'acheminement de la lubrification augmente l'encombrement à l'extérieur du corps externe de la turbine. Les réserves de lubrifiant sont en général positionnées en amont de la machine dans la zone froide de prise d'air du compresseur 410.

Il existe des systèmes de lubrification des paliers qui sont agencés pour amener du lubrifiant au niveau des bagues externes des paliers à travers des pompes et des gicleurs agencés au niveau des paliers ou relié aux paliers par des moyens de transfert de lubrifiant. Cependant, ces systèmes manquent d'efficacité et sont complexes à intégrer dans les turbines à gaz. En effet, Il est connu que l'apport du lubrifiant est plus efficace lorsque celui-ci est pratiqué par la bague intérieure tournante du palier. La migration du lubrifiant de la bague intérieure vers la bague extérieure à travers les éléments roulants étant assurée par les forces centrifuges. On connait le document FR3003300A1 qui décrit un système de lubrification d'un roulement entre un arbre externe et un arbre interne contrarotatifs. Le lubrifiant est amené depuis la paroi externe de l'arbre externe, par un racleur centripète qui va à l'encontre des forces centrifuge, vers sa paroi interne et une vis sans fin courte, solidaire de l'arbre interne qui pousse le lubrifiant vers la zone du roulement où une forme pentue tire parti des forces centrifuges pour terminer la migration de la lubrification vers le palier à lubrifier. Un tel système est complexe à mettre en œuvre et nécessite le guidage en rotation à la fois de l'arbre interne et de l'arbre externe.

On connait aussi le document US20130213740 qui porte sur la lubrification d'une transmission et divulgue un tube agencé dans un arbre creux rotatif pour injecter de l'huile dans ledit arbre creux, ce dernier comprenant des orifices radiaux formant des conduits pour acheminer l'huile par centrifugation vers des éléments à lubrifier à l'extérieur de l'arbre. L'extrémité du tube comprend un orifice axial afin de projeter de l'huile vers le fond de l'arbre tournant. Le tube est agencé en porte à faux dans l'arbre creux, et reste centré à l'intérieur de l'arbre grâce notamment à un joint annulaire intercalé radialement entre le tube et la paroi intérieure de l'arbre creux. Ce dispositif ne paraît pas adapté au cas d'un arbre creux qui tournerait à des vitesses très élevées, tel que par exemple un arbre d'une turbine à gaz de turbomachine, car le joint annulaire subirait une usure importante et devrait être remplacé fréquemment. De plus, la matière usée irait polluer le lubrifiant.

Il existe donc un besoin de lubrification des paliers supportant un arbre d'une turbine à gaz de façon plus efficace et plus fiable. EP1662095A2 divulgue un turboréacteur avec générateur de courant électrique intégré. WO2012/168649A1 divulgue un ensemble pour turbine à gaz comprenant un arbre central creux, qui est guidé en rotation par au moins un palier autour d'un axe de rotation, l'ensemble comprenant en outre un dispositif de lubrification dudit au moins un palier comprenant un arbre basse pression creux formant un tuyau d'acheminement de lubrifiant agencé dans l'arbre central creux et configuré pour acheminer le lubrifiant vers ledit au moins un palier, le tuyau d'acheminement de lubrifiant présentant une première section ayant un premier diamètre et une seconde section ayant un second diamètre supérieur au premier diamètre, et la seconde section comprenant une pluralité de canaux radiaux reliant l'intérieur du tube d'acheminement de lubrifiant et débouchant radialement à l'extérieur du tube d'acheminement de lubrifiant en direction d'une paroi radialement interne à l'arbre central creux.

### Résumé de l'invention

A cet effet, la présente invention propose un ensemble, pour turbine à gaz, comprenant un arbre central creux, destiné à être guidé en rotation par au moins un palier, l'ensemble comprenant en outre un dispositif de lubrification pour la lubrification dudit au moins un palier, ledit dispositif de lubrification comprenant un tube creux d'acheminement de lubrifiant agencé dans l'arbre central creux et configuré pour acheminer le lubrifiant vers ledit au moins un palier, ledit tube d'acheminement de lubrifiant étant agencé fixe en rotation par rapport à l'axe de rotation,
le tube d'acheminement présentant une première section ayant un premier diamètre et une seconde section ayant un second diamètre supérieur au premier diamètre,
la seconde section comprenant une pluralité de canaux radiaux reliant l'intérieur du tube d'acheminement de lubrifiant et débouchant radialement à l'extérieur du tube d'acheminement de lubrifiant en direction d'une paroi radialement interne de l'arbre central creux de sorte à former un film de lubrifiant entre ladite seconde section du tube d'acheminement de lubrifiant et ladite paroi radialement interne de l'arbre central creux. Ainsi, le film de lubrifiant permet de maintenir le tube d'acheminement de lubrifiant dans une position radiale constante. Ceci permet de simplifier le montage du tube d'acheminement de lubrifiant tout en acheminement le lubrifiant du coté interne dudit au moins un palier. L'ensemble permet donc une meilleure lubrification de l'au moins un palier. Le tube d'acheminement de lubrifiant peut être alimenté en lubrifiant à son extrémité amont et peut comporter un orifice à son extrémité aval permettant d'acheminer le lubrifiant au plus près dudit au moins un palier.

Des modes de réalisation particuliers de l'invention sont définis dans les revendications dépendantes.

La turbine à gaz peut comprendre un compresseur suivi d'une chambre de combustion qui produit des gaz chauds. Ces gaz chauds peuvent entrainer une turbine qui est configurée pour entrainer la rotation de l'arbre central.

Dans la présente description, la direction radiale est une direction perpendiculaire à un axe de rotation de l'arbre creux et une direction axiale ou longitudinale est une direction parallèle à l'axe de rotation et une direction radiale est une direction perpendiculaire à l'axe de rotation.

L'arbre central creux peut porter ou entrainer en rotation les parties tournantes de la turbine à gaz.

Le premier diamètre et le second diamètre peuvent être les diamètres externes de la première section et de la seconde section, respectivement.

Le lubrifiant peut être de préférence introduit sous pression dans le tube d'acheminement de lubrifiant.

Le second diamètre peut être compris entre 90% et 99% du diamètre de la paroi radialement interne de l'arbre central creux. Ainsi, un espace relativement mince peut être formé entre la surface radialement externe de la seconde partie et la paroi radialement interne de l'arbre central creux. Un film de lubrifiant peut être formé dans l'espace relativement mince entre la surface externe de la seconde section et la paroi interne de l'arbre central creux.

Ainsi, le film de lubrifiant permet de maintenir le tube d'acheminement de lubrifiant dans une position radiale constante sans contact direct avec l'arbre central creux. Ceci permet de simplifier le montage du tube d'acheminement de lubrifiant qui est alors autocentré dans l'arbre central creux.

La paroi radialement interne de l'arbre creux peut être la surface de la paroi radialement interne formant le creux de l'arbre central.

L'arbre central creux peut comporter des sections de diamètre interne supérieur au diamètre des sections permettant de créer le film de lubrifiant avec la seconde section du tube d'acheminement de lubrifiant.

La seconde section peut comprendre au moins un filet d'une partie filetée. Cette partie filetée peut être formée par un filet hélicoïdal. Le diamètre externe du filet peut être alors le diamètre de la seconde section du tube d'acheminement de la lubrification. Ainsi, l'arbre central étant entrainé en rotation en particulier lorsqu'un mouvement relatif en rotation entre l'arbre central creux et le tube d'acheminement de lubrifiant existe, le lubrifiant éjecté par les canaux radiaux se trouvant dans l'espace annulaire entre la partie filetée et la paroi radialement interne de l'arbre central creux est poussé par les filets de la partie filetée vers une partie aval du tube d'acheminement de lubrifiant et en particulier de l'arbre central. Ceci améliore la lubrification de l'au moins un palier et permet le centrage du tube d'acheminement de lubrifiant dans l'arbre central. L'amont du tube d'acheminement de lubrifiant est du côté de l'admission du lubrifiant dans le tube d'acheminement de lubrifiant. En particulier, ceci permet de forcer le lubrifiant vers la partie aval où se situe l'au moins un palier.

Le tube d'acheminement de lubrifiant peut comprendre une seule partie filetée, et une dimension longitudinale de ladite partie filetée peut être inférieure à une dimension longitudinale de l'arbre central. Le second diamètre peut être le diamètre externe des filets de la partie filetée.

La seconde section du tube d'acheminement de lubrifiant peut être formée par des filets de deux parties filetées séparées selon l'axe de rotation par une partie non filetée. Une première partie filetée desdites parties filetées peut être agencée du côté amont du tube d'acheminement de lubrifiant et une seconde partie filetée desdites parties filetées peut être agencée du côté aval du tube d'acheminement de lubrifiant.

Une surface radialement externe de chaque filet d'au moins une partie filetée peut comprendre une première surface cylindrique et une seconde surface inclinée par rapport à un axe de rotation de l'arbre central. La seconde surface peut être inclinée de sorte à converger vers l'axe de rotation de l'arbre central.

La surface radialement externe de chaque filet peut être agencée en vis-à-vis de la paroi radialement interne de l'arbre central. La seconde surface peut être conique.

La première surface cylindrique peut présenter un diamètre radialement externe quasiment égal au diamètre de la paroi radialement interne de l'arbre creux. La seconde surface inclinée peut présenter le second diamètre.

Ainsi, le second diamètre peut être variable, par exemple en diminuant de l'amont vers l'aval selon la direction de circulation du lubrifiant.

Au moins un des canaux radiaux peut déboucher sur une seconde surface inclinée de l'au moins une partie filetée du tube d'acheminement de lubrifiant, de manière à créer un effet de coin hydrodynamique et d'autocentrage du tube d'acheminement du lubrifiant.

Au moins un des canaux radiaux peut déboucher sur une surface cylindrique du tube d'acheminement de lubrifiant agencée en vis-à-vis de la paroi interne de l'arbre central.

La première surface cylindrique peut être agencé en amont de la seconde surface inclinée selon le sens de circulation du lubrifiant.

Une dimension longitudinale du tube d'acheminement de lubrifiant peut être inférieure à une dimension longitudinale de l'arbre central. Ainsi, le lubrifiant peut être acheminé vers une position longitudinale intermédiaire de l'arbre central.

Le tube d'acheminement de lubrifiant peut être agencé fixe en translation longitudinale par rapport à la turbine à gaz en particulier par rapport à l'arbre central.

L'ensemble peut comprendre des moyens de fixation du tube d'acheminement de lubrifiant en translation longitudinale et en rotation autour de l'axe de rotation.

Ainsi, le second diamètre qui peut être constitué d'une partie cylindrique puis conique de l'amont vers l'aval permet de créer un effet de coin hydrodynamique avec le lubrifiant et le mouvement relatif de l'arbre creux tournant par rapport au tube d'acheminement de lubrifiant qui est fixe, permettant le renforcement de l'auto-centrage du tube d'acheminement.

Au moins un des canaux radiaux peut déboucher sur une surface cylindrique du tube d'acheminement de lubrifiant agencée en vis-à-vis de la paroi radialement interne de l'arbre central.

La surface cylindrique du tube d'acheminement de lubrifiant peut être coaxiale avec la paroi radialement interne de l'arbre central. La paroi radialement interne de l'arbre central peut être aussi cylindrique.

Les canaux radiaux peuvent être distribués circonférentiellement autour de l'axe de rotation et distribués longitudinalement le long de la seconde section.

L'arbre central peut comprendre au moins une chambre de distribution de lubrifiant pour la lubrification dudit au moins un palier.

Le tube d'acheminement de lubrifiant peut comprendre un canal longitudinal débouchant dans ladite au moins une chambre de distribution de lubrifiant.

Le canal longitudinal peut déboucher à une extrémité longitudinale du tube d'acheminement de lubrifiant située au niveau d'une chambre de distribution de lubrifiant.

Le canal longitudinal peut être fluidiquement relié à une chambre de distribution de lubrifiant par un des canaux radiaux.

L'arbre central peut comprendre deux chambres de distribution de lubrifiant. Une chambre de distribution peut être agencée entre la première partie filetée et la seconde partie filetée. Chaque chambre de distribution peut présenter un diamètre interne supérieur au diamètre interne de la paroi radialement interne de l'arbre central.

Chaque chambre de distribution peut comprendre des orifices de distribution de lubrifiant distribués circonférentiellement autour de l'axe longitudinal et débouchant sur l'au moins un palier. Les orifices de distribution de lubrifiant permettent de diriger le lubrifiant vers l'au moins un palier depuis l'intérieur de la chambre de distribution.

L'arbre central peut comprendre une chambre d'évacuation de particules, par exemple les particules issues de l'usure du palier et du tube d'acheminement de lubrifiant, en particulier depuis l'intérieur de l'arbre central vers l'extérieur de ce dernier. La chambre d'évacuation de particules peut présenter un diamètre interne supérieur au diamètre interne de la paroi radialement interne de l'arbre central. Lesdites particules peuvent être issues par exemple de la recirculation des particules d'usure du palier et du tube d'acheminement de lubrifiant. La chambre d'évacuation de particules peut être agencée au niveau d'une partie aval du tube d'acheminement et en amont de la chambre de distribution de lubrifiant.

La chambre d'évacuation de particules peut être agencée entre la première partie filetée et la seconde partie filetée.

L'au moins un palier peut comprendre une bague interne montée autour de l'arbre central qui comprend une pluralité d'orifices débouchant sur au moins une bille, ou l'élément roulant, porté par la bague interne. Ces orifices peuvent être distribués circonférentiellement autour de l'axe longitudinal. La bague interne de l'au moins un palier peut comprendre deux rangées circonférentielles d'orifices espacées longitudinalement. Les rangées circonférentielles d'orifices peuvent être décalées circonférentiellement, en particulier angulairement autour de l'axe, l'une par rapport à l'autre. Dit autrement vu selon l'axe longitudinal, chaque orifice de l'une des rangées annulaires d'orifices de distribution peut être agencé circonférentiellement entre deux orifices de l'autre rangée annulaire d'orifice de distribution. Ceci permet une bonne répartition du lubrifiant dans le palier.

Au moins un des orifices du palier peut être orienté longitudinalement depuis une partie aval ou une partie amont de la bague interne vers un centre de rotation des billes, ou des éléments roulants, du palier. Ainsi, le lubrifiant est dirigé directement vers les billes, ou les éléments roulants, ce qui améliore la lubrification.

Le lubrifiant peut être par exemple de l'huile, ou encore du carburant. Le dispositif de lubrification peut comprendre des moyens de refroidissement du lubrifiant, par exemple un échangeur thermique.

Le tube d'acheminement de lubrifiant peut être réalisé en bronze pour limiter les frottements en phase transitoires où la lubrification est moins présente par exemple lors du démarrage/arrêt de la rotation de l'arbre central.

La chambre d'évacuation de particules peut être configurée pour évacuer une partie ou la totalité du film de lubrifiant compris dans l'espace annulaire entre la seconde section et la paroi radialement interne de l'arbre central.

L'ensemble peut comprend un joint d'étanchéité agencé dans un espace annulaire formé entre une paroi radialement externe du tube d'acheminement et la paroi radialement interne de l'arbre central. Le joint d'étanchéité peut être agencé au niveau d'une partie amont du tube d'acheminement de lubrifiant et peut être configuré pour éviter l'écoulement du lubrifiant vers l'amont du tube d'acheminement de lubrifiant soit vers l'arrivée du lubrifiant.

La seconde section du tube d'acheminement de lubrifiant peut comporter un premier filetage et un second filetage parallèles. Le premier filetage peut s'étendre sur une partie ou la totalité de la partie filetée. Le second filetage peut s'étendre sur une partie ou la totalité de la partie filetée. La partie filetée peut comprendre les deux filetages en particulier lorsque le pas du premier filetage est supérieur à 45°, de manière à avoir les deux filets chargés par l'effort hydrodynamique en vis-à-vis de manière à éviter de mettre localement en flexion le tube d'acheminement de lubrifiant.

Selon un mode de réalisation, le tube d'acheminement de lubrifiant peut être agencé en porte à faux à l'intérieur de l'arbre central creux.

Selon un mode de réalisation, ledit tube d'acheminement de lubrifiant peut être agencé fixe en translation longitudinal par rapport à l'axe de rotation.

La présente invention concerne encore une turbine à gaz comprenant un ensemble tel que précité.

### Brève description des figures

[Fig. 1] la figure 1, déjà décrite, représente une coupe schématique de profil d'une turbine à gaz pour aéronef.
[Fig. 2] la figure 2 représente une coupe schématique vue de profil d'un arbre central d'une turbine à gaz équipé d'un premier exemple de dispositif de lubrification selon l'invention.
[Fig. 3] la figure 3 représente une coupe schématique vue en perspective de l'arbre de la figure 2.
[Fig. 4] la figure 4 représente une vue de profil d'une extrémité du dispositif de lubrification selon l'invention.
[Fig. 5] la figure 5 représente une coupe schématique vue de profil d'un arbre central d'une turbine à gaz équipé d'un deuxième exemple de dispositif de lubrification selon l'invention.
[Fig. 6] la figure 6 représente une coupe schématique vue de profil d'un arbre central d'une turbine à gaz équipé d'un troisième exemple de dispositif de lubrification selon l'invention.
[Fig. 7] la figure 7 représente une coupe schématique vue de profil d'un arbre central d'une turbine à gaz équipé d'un quatrième exemple de dispositif de lubrification selon l'invention.
[Fig. 8] la figure 8 représente une partie de la turbine à gaz de la figure 1 équipée par un exemple du dispositif de lubrification selon l'invention.
[Fig. 9] la figure 9 représente un groupe auxiliaire de puissance comprenant un exemple du dispositif de lubrification,
[Fig. 10] la figure 10, déjà décrite, représente un groupe auxiliaire de puissance selon l'art antérieur.

### Description détaillée de l'invention

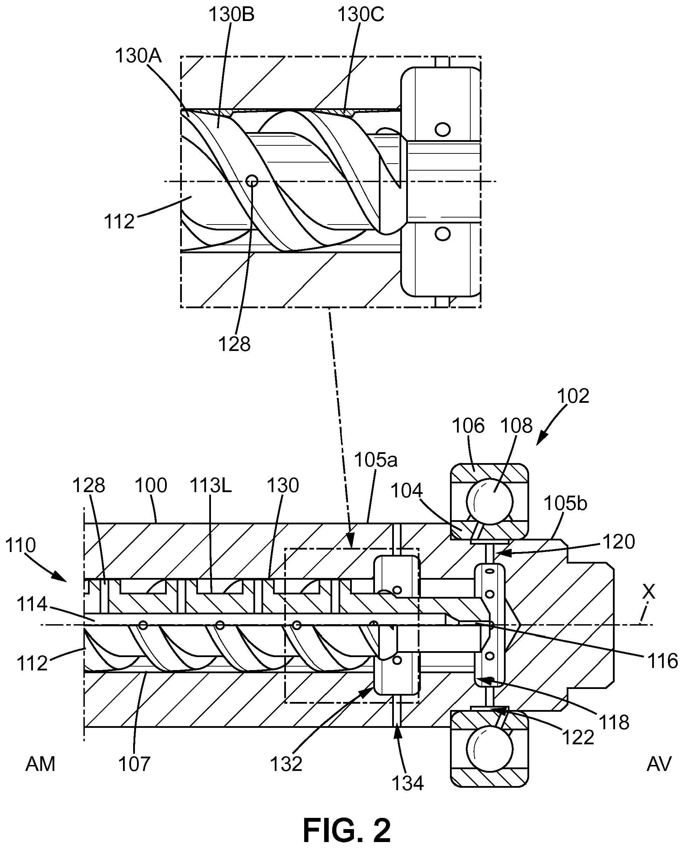

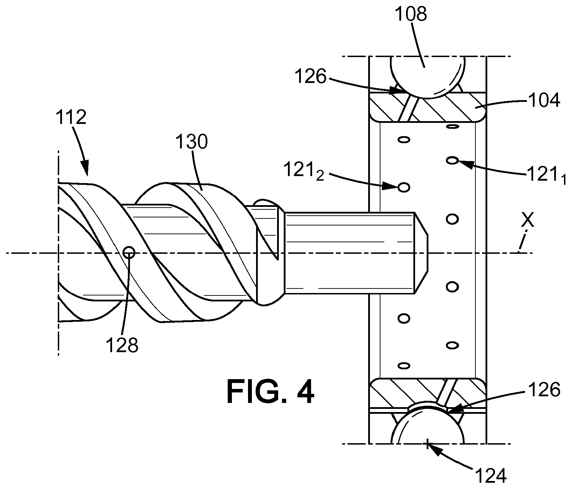

Les figures 2 à 4 représentent un arbre central 100 rotatif autour d'un axe longitudinal X prévu pour une turbomachine. L'arbre central 100 est creux et présente donc une paroi radialement interne 107.

L'arbre central 100 est guidé en rotation par un palier 102 agencé dans une partie aval de l'arbre central 100. Bien entendu, d'autres paliers, tel que le palier 103, peuvent être prévus pour guider la rotation de l'arbre central 100 et peuvent être agencés en partie amont de l'arbre central 100 ou le long de celui-ci. En outre, d'autres paliers peuvent aussi être agencés en partie aval de l'arbre central 100.

Le palier 102 comprend une bague interne 104 montée autour d'une paroi radialement externe 105 de l'arbre central 100 et une bague externe 106 pouvant être montée dans un carter de la turbine à gaz. Le palier 102 comprend aussi des billes 108 agencées entre la bague interne 104 et la bague externe 106 et qui sont distribuées circonférentiellement autour de l'axe longitudinal X. Le palier 102 peut comprendre des éléments roulants cylindriques ou coniques au lieu des billes 108. La paroi 105 comprend un tronçon principal 105a et un tronçon d'extrémité 105b. La bague interne 104 est montée autour du tronçon d'extrémité 105b.

Afin d'assurer la lubrification du palier 102, l'arbre central 100 est équipé d'un dispositif de lubrification 110 qui comprend un tube 112 agencé à l'intérieur de l'arbre central 100. Le tube 112 présente une paroi radialement externe portant sur une partie filetée 113 de sa longueur un filetage hélicoïdal. Le filetage peut s'étendre de préférence sur sensiblement toute la longueur du tube 112 ou sur une partie de la longueur du tube 112.

Le tube 112 est en outre creux et comprend un canal interne 114 s'étendant sur toute la longueur du tube 112 pour acheminer du lubrifiant depuis l'amont AM du tube 112 vers le palier 102. Le canal interne 114 présente un rétrécissement 116 à l'extrémité aval du tube 112 se terminant par une buse 116 qui déverse le lubrifiant dans une chambre de distribution 118 de l'arbre central 100. Le canal interne 114 peut déboucher directement à l'extrémité aval du tube 112 sans rétrécissement.

Le lubrifiant peut être à base d'huile. Le lubrifiant est de préférence introduit sous pression dans le canal interne 114.

Le lubrifiant permet le graissage des éléments roulants du palier 102 et l'évacuation des calories accumulées lors de la rotation du palier 102.

La chambre de distribution 118 est formée à l'intérieur de l'arbre central 100 et présente un diamètre interne supérieur au diamètre interne de la paroi radialement interne 107 de l'arbre central 100. La chambre de distribution 118 comprend une pluralité d'orifices de distribution 120 distribués circonférentiellement autour de l'axe longitudinal X et qui débouchent sur le tronçon d'extrémité 105b de la paroi radialement externe 105 de l'arbre central 100. En particulier, les orifices de distribution 120 débouchent sur une gorge 122 formée dans le tronçon d'extrémité 105b.

La gorge 122 forme un espace annulaire entre la surface du tronçon d'extrémité 105b et la bague interne 104, dans lequel le lubrifiant peut s'accumuler. Le lubrifiant déversé dans la chambre de distribution 118 par le tube 112 est acheminé à travers les orifices de distribution 120 dans la gorge 122 par la force centrifuge lorsque l'arbre central 100 est en rotation autour de l'axe longitudinal X. La force centrifuge permet en outre d'amener le lubrifiant vers la bague externe 106.

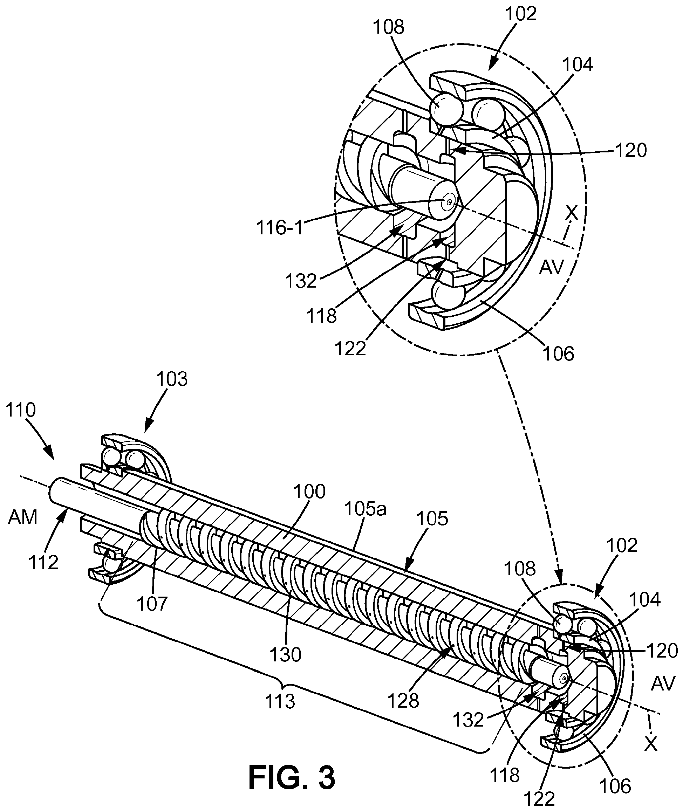

Pour diriger le lubrifiant vers les billes 108, la bague interne 104 présente deux rangées annulaires d'orifices de distribution 121₁ et 121₂ espacée longitudinalement et dans lesquelles les orifices de distribution sont distribués circonférentiellement autour de l'axe longitudinal X. Telles que montrées sur la figure 3, les orifices de la rangée annulaire d'orifices de distribution 121₁ sont décalés circonférentiellement, en particulier angulairement selon l'axe de l'arbre central par rapport aux orifices de la rangée annulaire d'orifices de distribution 121₂. Dit autrement, vu selon l'axe longitudinal X, chaque orifice de l'une des rangées annulaires d'orifices de distribution 121₁ et 121₂ est agencé circonférentiellement entre deux orifices de l'autre rangée annulaire d'orifice de distribution 121₁ et 121₂. Par exemple, chaque orifice de l'une des rangées annulaires d'orifices de distribution 121₁ et 121₂ est agencé circonférentiellement au milieu entre les deux orifices de l'autre rangée annulaire d'orifice de distribution 121₁ et 121₂. Ceci permet une bonne répartition du lubrifiant dans le palier 102.

La rangée annulaire d'orifices de distribution 121₁ agencée en partie aval présente des orifices de distribution orientée longitudinalement depuis l'aval vers l'amont en particulier vers un centre de rotation 124 des billes 108. Ainsi, les orifices de distribution de la rangée annulaire d'orifices de distribution 121₁ aval débouchent au niveau d'une partie centrale 126 de l'intérieur de la bague interne 104.

De façon symétrique, la rangée annulaire d'orifices de distribution 121₂ agencée en partie amont présente des orifices de distribution orientée longitudinalement depuis l'amont vers l'aval en particulier vers le centre de rotation 124 des billes 108. Ainsi, les orifices de distribution de la rangée annulaire d'orifices de distribution 121₂ amont débouchent au niveau de la partie centrale 126 de l'intérieur de la bague interne 104. Alternativement, la bague interne 104 peut comprendre une unique rangée annulaire d'orifices de distribution ou plus de deux rangées annulaires d'orifices de distribution espacées longitudinalement.

Le tube 112 est maintenu fixe en rotation et en translation longitudinale par rapport à l'arbre central 100 par des moyens dédiés agencés dans la partie amont du tube 112.

Le tube 112 étant agencé en porte à faux à l'intérieur de l'arbre 100, il risque de subir des déformations et des usures par frottement lors de la rotation de l'arbre central 100. Pour éviter d'endommager le tube 112, des canaux radiaux 128 traversent l'épaisseur du tube 112 depuis le canal interne 114 en débouchant sur un sommet de filet 130 de la partie filetée 113 du tube 112.

Ainsi, le lubrifiant acheminé sous pression dans la canal interne 114 est éjecté radialement à travers les canaux radiaux 128 en direction de la paroi radialement interne 107 de l'arbre central 100 et forme un film de lubrifiant entre la paroi radialement externe 130 du tube 112 et la paroi radialement interne 107 de l'arbre central 100, en particulier dans l'espace 130C. Ce film de lubrifiant permet de maintenir le tube 112 dans une position radiale constante et évite le contact entre le tube 112 et l'arbre 100. La partie filetée 113 du tube 112 permet aussi de diriger le lubrifiant vers la chambre d'évacuation 132 lorsque l'arbre central 100 est en rotation. La partie filetée 113 du tube 112 forme ainsi une vis sans fin. La partie filetée 113 du tube 112 permet d'éviter le reflux du lubrifiant vers l'amont du tube 112. C'est le canal interne 114 et la buse 116 du tube 112 qui acheminent un lubrifiant propre vers la chambre de distribution 118 pour alimenter le roulement aval.

En particulier, chaque sommet de filet 130 présente une première surface 130A radialement externe qui est cylindrique. Chaque sommet de filet 130 présente aussi une seconde surface 130B radialement externe et agencée en aval de la première surface 130A selon le sens de circulation du fluide qui est inclinée par rapport à l'axe longitudinal X. Les canaux radiaux 128 débouchent au niveau de la seconde surface inclinée 130B.

La première surface 130A est coaxiale avec la paroi radialement interne 107 de l'arbre central 100. La première surface 130A maintient la présence d'un film de lubrifiant avec la paroi radialement interne 107 de l'arbre central 100. Autrement dit, un film de lubrifiant est maintenu dans un espace radial entre la première surface 130A et la paroi radialement interne 107 de l'arbre central 100.

Ainsi le profil des filets 130 permet une portance due au film de lubrifiant lors du mouvement relatif entre le tube d'acheminement de lubrifiant 112 et l'arbre central 100. L'acheminement du lubrifiant au niveau de la seconde surface 130B inclinée engendre un effet de coin hydrodynamique qui participe grandement à la portance. La portance hydrodynamique produite sous l'effet d'un coin d'huile est obtenue en créant un écoulement par une action de cisaillement du film d'huile entre deux surfaces non parallèles, ce qui est réalisé ici du fait que la seconde surface 130B est inclinée par rapport à la paroi radialement interne 107. La première surface 130A permet quant à elle d'avoir une surface d'usure dédiée en cas de contact pour éviter une usure de la seconde surface 130B. L'éventualité d'un tel contact peut survenir lors des démarrages, mais une fois la turbine en fonctionnement la présence du film de lubrifiant permet d'empêcher le contact. Cette surface d'usure formée par la première surface 130A, qui est parallèle à la paroi radialement interne 107 de l'arbre central 100, permet de limiter considérablement l'usure au démarrage par rapport à une configuration dans laquelle le contact porterait seulement sur un angle vif de la seconde surface 130B.

La portance hydrodynamique créée par effet de coin d'huile permet que le tube d'acheminement de lubrifiant 112 se centre de lui-même quelle que soit la pression d'injection du lubrifiant dans le tube d'acheminement 112.

Les canaux radiaux 128 sont distribuées circonférentiellement et longitudinalement autour de l'axe longitudinal X. Les canaux radiaux 128 peuvent avantageusement être espacés circonférentiellement et longitudinalement de façon uniforme le long du tube 112.

L'arbre central 100 comprend en outre une chambre d'évacuation de particules 132 formée à l'intérieur de ce dernier et présentant un diamètre interne supérieur au diamètre interne de la paroi radialement interne 107 de l'arbre central 100. Ainsi, les particules formées par le vieillissement du lubrifiant et en particulier issues des différentes usures de contact et charriées par le lubrifiant se déversent dans la chambre d'évacuation de particules 132.

La chambre d'évacuation de particules 132 comprend une pluralité d'orifices de distribution 134 distribués circonférentiellement autour de l'axe longitudinal X et qui débouchent sur le tronçon d'extrémité 105b de la paroi radialement externe 105 de l'arbre central 100. Les particules dues à l'usure du lubrifiant sont donc évacuées avant d'atteindre la chambre de distribution 118 et n'arrivent donc pas au palier 102, ce qui évite toute pollution du palier 102. Par exemple, le diamètre interne de la chambre d'évacuation de particules 132 peut être supérieur au diamètre interne de la chambre de distribution 118. Une dimension longitudinale de la chambre d'évacuation de particules 132 peut être supérieure à la dimension longitudinale de la chambre de distribution 118.

La chambre d'évacuation de particules 132 peut être configurée pour évacuer une partie ou la totalité du film de lubrifiant compris dans l'espace annulaire entre la partie filetée 113 et la paroi radialement interne 107 de l'arbre central 100.

Le dispositif de lubrification 110 peut comprendre d'autres chambres d'évacuation de particules, similaires à la chambre d'évacuation de particules 132 et agencées le long de l'arbre central 100.

Le dispositif de lubrification 110 peut comprendre des moyens de refroidissement du lubrifiant, par exemple un échangeur thermique.

Le tube 112 peut être réalisé en bronze pour limiter les frottements en phase transitoires où la lubrification est moins présente par exemple lors du démarrage/arrêt de la rotation de l'arbre central 100.

Le tube 112 peut comprendre un filetage supplémentaire, en particulier parallèle au premier filetage hélicoïdal, lorsque le pas du filetage de la partie filetée 113 est supérieur à 45°. Cela permet d'équilibrer l'effort hydrodynamique d'un filet pouvant mettre en flexion le tube 112 et en particulier d'avoir les deux filets chargés par l'effort hydrodynamique diamétralement en vis-à-vis de manière à éviter de mettre localement en flexion le tube d'acheminement de lubrifiant 112. En d'autres termes, les deux filets progressent en décalage de 180° l'un de l'autre, ce qui produit des efforts hydrodynamiques diamétralement opposés qui se compensent.

Les jeux 130c entre la paroi radialement externe du tube 112, en particulier la surface 130 des filets du tube 112, et la paroi radialement interne 107 de l'arbre central 100, sont choisis de sorte à avoir un centrage stable de la vis et éviter un échauffement du lubrifiant avant qu'il n'atteigne le palier 102.

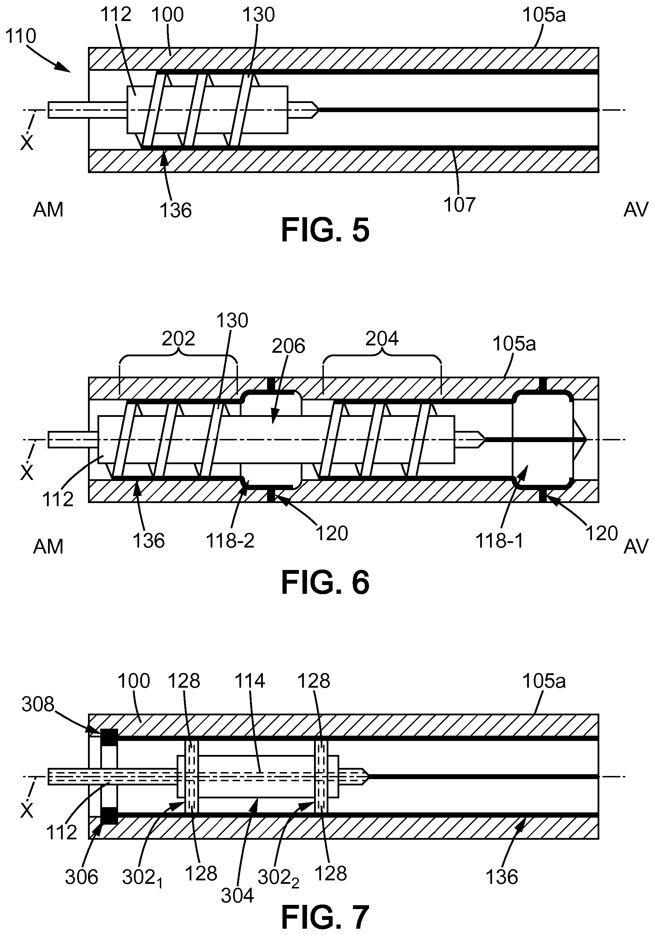

Dans la variante du tube 112 représentée sur la figure 5, la dimension longitudinale du tube 112 est inférieure à la dimension longitudinale de l'arbre central 100, en particulier de la partie intérieure de l'arbre centrale. Le canal interne 114 débouche ainsi à une position longitudinale intermédiaire de l'arbre central 100. La partie filetée 113 portant le filetage externe du tube 112 refoule le lubrifiant 136 vers la partie aval de l'arbre central 100 en direction du palier 102 à lubrifier.

Dans la variante représentée sur la figure 6, le tube 112 présente une première partie filetée 202 et une seconde partie filetée 204 séparée longitudinalement de la première partie filetée 202 par une partie non filetée 206 du tube 112. Les filetages de la première partie filetée 202 et de la seconde partie filetée 204 peuvent être identiques, c'est-à-dire les diamètres externes des filetages, les pas des filetages, etc. sont identiques. L'arbre central 100 comprend deux chambres de distribution de lubrifiant 118-1 et 118-2. Ainsi, il est possible de lubrifier deux paliers distincts sur lesquels est monté l'arbre et qui sont agencés en regard radialement des orifices de distribution 120. La chambre intermédiaire 118-2 de distribution de lubrifiant peut être alimentée en lubrifiant, soit par le lubrifiant issu des perçages radiaux 128 de la première partie filetée 202 et qui est refoulé vers l'aval jusqu'à la chambre intermédiaire 118-2, soit par au moins un conduit par exemple formé par un perçage radial dans le tube 112 au droit de la chambre intermédiaire. Ainsi, il peut être prévu de disposer une chambre d'évacuation de particules dans l'arbre central 100 entre la première partie filetée 202 et la chambre intermédiaire 118-2, afin de permettre l'apport de lubrifiant propre dans la chambre intermédiaire 118-2.

La chambre de distribution de lubrifiant 118-2 est agencée longitudinalement entre la première partie filetée 202 et la seconde partie filetée 204.

La chambre de distribution 118-1 reçoit quant à elle du lubrifiant issu des perçages radiaux 128 de la seconde partie filetée 204 et refoulé vers l'aval, ainsi que du lubrifiant propre issu du canal central 114 et de la buse 116 du tube 112.

Bien entendu, le tube 112 peut comprendre plus de deux parties filetées séparées successivement par des parties non filetées. Par exemple, l'arbre central 100 peut comprendre une chambre d'évacuation de particules agencée entre deux parties filetées successives.

Dans l'exemple de réalisation représenté sur la figure 7, le tube 112 est dépourvu de partie filetée 113 mais comprend une première section 304 entourée par une seconde section 302 présentant un diamètre supérieur au diamètre de la première section 304. La seconde section 302 comprend une première partie 302₁ et une seconde partie 302₂ séparées longitudinalement par la première section 304. Chacune de la première partie 302₁ et de la seconde partie 302₂ comprend les canaux radiaux 128 qui débouchent dans un espace annulaire entre la seconde section 302 et la paroi radialement interne de l'arbre central 100. Chacune de la première partie 302₁ et de la seconde partie 302₂ présente une paroi radialement externe cylindrique et coaxiale avec la paroi radialement interne 107 de l'arbre central 100. Le lubrifiant admis dans le canal interne 114 est ainsi éjecté à travers les canaux radiaux 128 en direction de la paroi radialement interne 107 de l'arbre central 100 et forme un film de lubrifiant 136 qui permet le centrage du tube 112 dans l'arbre central 100.

La chambre de distribution, non représentée sur la figure 7, peut être agencée en aval de l'extrémité aval du tube 112, et la chambre d'évacuation de particules peut être agencée longitudinalement en amont de la chambre de distribution.

La première partie 302₁ et la seconde partie 302₂ peuvent présenter des dimensions longitudinales identiques.

Les canaux radiaux 128 peuvent former une rangée annulaire, en particulier être distribués circonférentiellement, autour de la paroi radialement externe de chacune de la première partie 302₁ et la seconde partie 302₂.

Pour éviter une fuite du lubrifiant 136 vers l'amont, un joint d'étanchéité 306 est agencé dans une partie amont de l'arbre central 100, par exemple en amont de la première partie 302₁. Le joint d'étanchéité 306 est agencé dans l'espace annulaire entre le tube 112 et la paroi radialement interne 107 de l'arbre central 100. Le joint d'étanchéité 306 est agencée dans une rainure 308 prévue dans la paroi radialement interne 107 de l'arbre central 100. Le joint d'étanchéité 306 peut être un joint à lèvre dynamique.

La seconde section 302 peut comprendre d'autres parties similaires aux première et seconde parties 302 portant des canaux radiaux 128 et séparées longitudinalement par une partie de la première section 304.

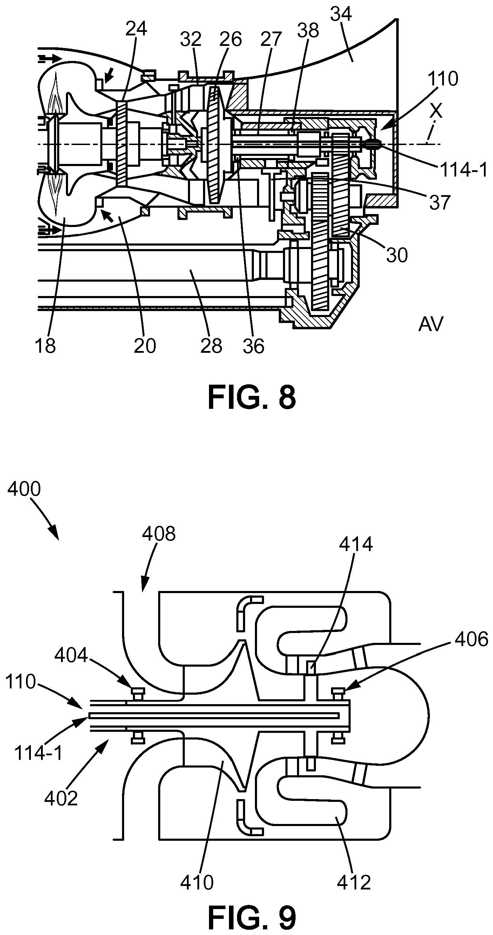

Le dispositif de lubrification110 peut équiper par exemple l'arbre de turbine 27 de la turbine libre 26, tel que montré sur la figure 8, pour permettre la lubrification d'un palier amont 36 et/ou d'un palier aval 38 de cet arbre 27. Le lubrifiant peut être introduit par l'entrée 114-1 du canal interne 114. Le dispositif de lubrification 110 n'a donc pas besoin de traverser des parties très chaudes de la turbomachine 10, comme en particulier la zone des gaz d'échappement, et permet ainsi d'éviter une température excessive du lubrifiant tout en réduisant l'encombrement du système de lubrification.

Le dispositif de lubrification 110 peut équiper également un arbre de turbine 402 d'un groupe auxiliaire de puissance (APU) 400, tel que montré sur la figure 9. Le dispositif de lubrification 110 permet de lubrifier au moins un palier 404, 406 portant l'arbre de turbine 402. Il présente un intérêt particulier pour la lubrification du palier aval 406, car ce dernier est entouré par le conduit des gaz d'échappement et est donc difficile d'accès depuis l'extérieur de l'arbre de turbine 402. Le palier 406 est situé dans une zone à relativement haute température et nécessite une lubrification efficace pour l'évacuation des calories. L'entrée 114-1 du canal interne 114 pour acheminer le lubrifiant est située à distance de cette zone chaude.

L'APU 400 est destiné à produire de l'énergie électrique, pneumatique ou hydraulique pour alimenter un aéronef le comprenant. Un tel APU 400 est généralement positionné à l'arrière de l'aéronef, dans le cône de queue.

L'APU 400 comprend une entrée d'air 408 desservant un compresseur 410. L'air comprimé en sortie du compresseur est dirigé vers une chambre de combustion 412 qui produit en sortie des gaz chauds. Ces derniers entrainent l'arbre de turbine 402 à travers la turbine 414. L'entrée 114-1 du canal interne 114 peut être située par exemple axialement en amont de l'entrée d'air 408. L'arbre de turbine 402 peut être relié à un générateur électrique, auquel cas l'entrée 114-1 peut être située au niveau d'une interface, telle que par exemple un carter de la pignonnerie d'un réducteur, entre l'arbre de turbine 402 et le rotor du générateur électrique. Ceci permet de limiter la longueur du tube d'acheminement de lubrifiant 112 en évitant ainsi que ce tube 112 ne traverse la longueur d'un rotor du générateur lorsqu'il est aligné avec l'arbre de la turbine 402.

## Revendications

1. Ensemble, pour turbine à gaz, comprenant un arbre central (100) creux, destiné à être guidé en rotation par au moins un palier (102) autour d'un axe de rotation, l'ensemble comprenant en outre un dispositif de lubrification (110) pour la lubrification dudit au moins un palier (102), ledit dispositif de lubrification comprenant un tube (112) creux d'acheminement de lubrifiant agencé dans l'arbre central creux (100) et configuré pour acheminer le lubrifiant vers ledit au moins un palier (102), ledit tube d'acheminement de lubrifiant étant agencé fixe en rotation par rapport à l'axe de rotation,
le tube d'acheminement de lubrifiant (112) présentant une première section (304, 113L) ayant un premier diamètre et une seconde section (302, 130) ayant un second diamètre supérieur au premier diamètre, et
la seconde section (302, 130) comprenant une pluralité de canaux radiaux (128) reliant l'intérieur du tube d'acheminement de lubrifiant (112) et débouchant radialement à l'extérieur du tube d'acheminement de lubrifiant en direction d'une paroi radialement interne (107) de l'arbre central creux (100) de sorte à former un film de lubrifiant (136, 130C) entre ladite seconde section (302, 130) du tube d'acheminement de lubrifiant (112) et ladite paroi radialement interne (107) de l'arbre central creux (100).

2. Ensemble selon la revendication 1, dans lequel le second diamètre est compris entre 90% et 99% du diamètre de la paroi radialement interne (107) de l'arbre central (100) creux.

3. Ensemble selon la revendication 1 ou 2, dans lequel la seconde section comprend au moins un filet (130) d'une partie filetée (113,202,204).

4. Ensemble selon la revendication 3, dans lequel le tube d'acheminement de lubrifiant (112) comprend une seule partie filetée, et une dimension longitudinale de ladite partie filetée est inférieure à une dimension longitudinale de l'arbre central creux (100).

5. Ensemble selon la revendication 3, dans lequel la seconde section (130) du tube d'acheminement de lubrifiant (112) est formée par des filets de deux parties filetées (202,204) séparées selon l'axe de rotation (X) par une partie non filetée (206).

6. Ensemble selon l'une des revendications 3 à 5, dans lequel une surface radialement externe de chaque filet (130) d'au moins une partie filetée comprend une première surface (130A) cylindrique et une seconde surface (130B) inclinée par rapport à l'axe de rotation (X) de l'arbre central creux (100), la seconde surface (130B) étant inclinée de sorte à converger vers l'axe de rotation (X) de l'arbre central creux (100).

7. Ensemble selon la revendication 6, dans lequel au moins un des canaux radiaux (128) débouche sur une seconde surface inclinée (130B) de l'au moins une partie filetée du tube d'acheminement de lubrifiant (112).

8. Ensemble selon l'une des revendications 1 à 7, dans lequel l'arbre central creux (100) comprend au moins une chambre de distribution (118) de lubrifiant pour la lubrification dudit au moins un palier (102), le tube d'acheminement de lubrifiant (112) comprenant un canal longitudinal (114) débouchant dans ladite au moins une chambre de distribution de lubrifiant (118).

9. Ensemble selon la revendication 8, dans lequel l'arbre central creux (100) comprend au moins un canal (120) traversant radialement l'arbre creux et débouchant d'une part dans la chambre de distribution et destiné d'autre part à déboucher en regard d'une bague interne (104) du palier (102).

10. Ensemble selon l'une des revendications 1 à 9, dans lequel l'arbre central creux (100) comprend au moins une chambre d'évacuation (132) de particules présentant un diamètre interne supérieur au diamètre interne de la paroi radialement interne (107) de l'arbre central creux (100).

11. Ensemble selon l'une des revendications 1 à 10 en combinaison avec la revendication 3, dans lequel la seconde section (130) du tube d'acheminement de lubrifiant (112) comporte un premier filetage et un second filetage parallèle.

12. Ensemble selon l'une des revendications 1 à 11, dans lequel le tube d'acheminement de lubrifiant (112) est agencé en porte à faux à l'intérieur de l'arbre central creux (100).

13. Turbine à gaz comprenant un ensemble selon l'une des revendications précédentes.

14. Ensemble selon la revendication 1, **caractérisé en outre en ce que** ledit tube d'acheminement de lubrifiant est agencé fixe en translation longitudinal par rapport à l'axe de rotation.

## Patentansprüche

1. Anordnung für eine Gasturbine, umfassend eine zentrale Hohlwelle (100), die über zumindest ein Lager (102) um eine Drehachse drehbar geführt ist, wobei die Anordnung ferner eine Schmiervorrichtung (110) zum Schmieren des zumindest einen Lagers (102) umfasst, wobei die Schmiervorrichtung ein hohl ausgebildetes Schmiermittelzuführrohr (112) umfasst, das in der zentralen Hohlwelle (100) angeordnet und dazu ausgelegt ist, dem zumindest einen Lager (102) Schmiermittel zuzuführen, wobei das Schmiermittelzuführrohr drehfest in Bezug auf die Drehachse angeordnet ist, wobei das Schmiermittelzuführrohr (112) einen ersten Abschnitt (304, 113L) mit einem ersten Durchmesser und einen zweiten Abschnitt (302, 130) mit einem zweiten Durchmesser aufweist, der größer ist als der erste Durchmesser, und
wobei der zweite Abschnitt (302, 130) eine Vielzahl von radial verlaufenden Kanälen (128) umfasst, die den Innenraum des Schmiermittelzuführrohrs (112) verbinden und radial nach außen aus dem Schmiermittelzuführrohr in Richtung einer radial inneren Wand (107) der zentralen Hohlwelle (100) münden, um einen Schmiermittelfilm (136, 130C) zwischen dem genannten zweiten Abschnitt (302, 130) des Schmiermittelzuführrohrs (112) und der genannten radial inneren Wand (107) der zentralen Hohlwelle (100) zu bilden.

2. Anordnung nach Anspruch 1,
wobei der zweite Durchmesser zwischen 90 % und 99 % des Durchmessers der radial inneren Wand (107) der zentralen Hohlwelle (100) beträgt.

3. Anordnung nach Anspruch 1 oder 2,
wobei der zweite Abschnitt zumindest ein Gewinde (130) eines Gewindeabschnitts (113, 202, 204) umfasst.

4. Anordnung nach Anspruch 3,
wobei das Schmiermittelzuführrohr (112) einen einzelnen Gewindeabschnitt umfasst und eine Längsabmessung des Gewindeabschnitts kleiner ist als eine Längsabmessung der zentralen Hohlwelle (100).

5. Anordnung nach Anspruch 3,
wobei der zweite Abschnitt (130) des Schmiermittelzuführrohrs (112) aus Gewindegängen zweier Gewindeabschnitte (202, 204) gebildet ist, die entlang der Drehachse (X) durch einen gewindefreien Abschnitt (206) voneinander getrennt sind.

6. Anordnung nach einem der Ansprüche 3 bis 5,
wobei eine radial äußere Fläche jedes Gewindes (130) zumindest eines Gewindeabschnitts eine zylindrische erste Fläche (130A) und eine zweite Fläche (130B) umfasst, die in Bezug auf die Drehachse (X) der zentralen Hohlwelle (100) geneigt ist, wobei die zweite Fläche (130B) so geneigt ist, dass sie auf die Drehachse (X) der zentralen Hohlwelle (100) zu verläuft.

7. Anordnung nach Anspruch 6,
wobei zumindest einer der radial verlaufenden Kanäle (128) auf eine zweite geneigte Fläche (130B) des zumindest einen Gewindeabschnitts des Schmiermittelzuführrohrs (112) mündet.

8. Anordnung nach einem der Ansprüche 1 bis 7,
wobei die zentrale Hohlwelle (100) zumindest eine Schmiermittelverteilungskammer (118) zum Schmieren des zumindest einen Lagers (102) umfasst, wobei das Schmiermittelzuführrohr (112) einen Längskanal (114) aufweist, der in die zumindest eine Schmiermittelverteilungskammer (118) mündet.

9. Anordnung nach Anspruch 8,
wobei die zentrale Hohlwelle (100) zumindest einen Kanal (120) aufweist, der sich radial durch die Hohlwelle hindurch erstreckt und einerseits in die Verteilungskammer und andererseits gegenüber einem inneren Lagerring (104) des Lagers (102) mündet.

10. Anordnung nach einem der Ansprüche 1 bis 9,
wobei die zentrale Hohlwelle (100) zumindest eine Partikelabführkammer (132) aufweist, deren Innendurchmesser größer ist als der Innendurchmesser der radial inneren Wand (107) der zentralen Hohlwelle (100).

11. Anordnung nach einem der Ansprüche 1 bis 10 in Kombination mit Anspruch 3,
wobei der zweite Abschnitt (130) des Schmiermittelzuführrohrs (112) ein erstes Gewinde und parallel dazu ein zweites Gewinde aufweist.

12. Anordnung nach einem der Ansprüche 1 bis 11,
wobei das Schmiermittelzuführrohr (112) freitragend innerhalb der zentralen Hohlwelle (100) angeordnet ist.

13. Gasturbine mit einer Anordnung nach einem der vorstehenden Ansprüche.

14. Anordnung nach Anspruch 1,
ferner **dadurch gekennzeichnet, dass** das Schmiermittelzuführrohr in Längsrichtung relativ zur Drehachse verschiebefest angeordnet ist.

## Claims

1. Assembly for a gas turbine comprising a hollow central shaft (100) which is guided in rotation by at least one bearing (102) around an axis of rotation, the assembly further comprising a device (110) for the lubrication of said at least one bearing (102), said lubrification device comprising a hollow lubricant delivery tube (112) arranged in the hollow central shaft (100) and configured to convey the lubricant to said at least one bearing (102), said lubricant delivery tube being arranged to be fixed in rotation relative to the axis of rotation,
the lubricant delivery tube (112) having a first section (304, 113L) with a first diameter and a second section (302, 130) with a second diameter that is greater than the first diameter, and
the second section (302, 130) comprising a plurality of radial channels (128) connecting the inside of the lubricant delivery tube (112) and leading radially to the outside of the lubricant delivery tube towards a radially inner wall (107) of the hollow central shaft (100) so as to form a lubricant film (136, 130C) between said second section (302, 130) of the lubricant delivery tube (112) and said radially inner wall (107) of the hollow central shaft (100).

2. Assembly according to claim 1, wherein the second diameter is between 90% and 99% of the diameter of the radially inner wall (107) of the hollow central shaft (100).

3. Assembly according to claim 1 or 2, wherein the second section comprises at least one thread (130) of a threaded portion (113,202,204).

4. Assembly according to claim 3, wherein the lubricant delivery tube (112) comprises a single threaded portion, and a longitudinal dimension of said threaded portion is less than a longitudinal dimension of the hollow central shaft (100).

5. Assembly according to claim 3, wherein the second section (130) of the lubricant delivery tube (112) is formed by threads of two threaded portions (202,204) separated along the axis of rotation (X) by a non-threaded portion (206).

6. Assembly according to one of claims 3 to 5, wherein a radially outer surface of each thread (130) of at least one threaded portion comprises a first cylindrical surface (130A) and a second surface (130B) that is inclined relative to the axis of rotation (X) of the hollow central shaft (100), the second surface (130B) being inclined so as to converge towards the axis of rotation (X) of the hollow central shaft (100).

7. Assembly according to claim 6, wherein at least one of the radial channels (128) leads to an inclined second surface (130B) of the at least one threaded portion of the lubricant delivery tube (112).

8. Assembly according to one of claims 1 to 7, wherein the hollow central shaft (100) comprises at least one lubricant distribution chamber (118) for the lubrication of said at least one bearing (102), the lubricant delivery tube (112) comprising a longitudinal channel (114) which leads into said at least one lubricant distribution chamber (118).

9. Assembly according to claim 8, wherein the hollow central shaft (100) comprises at least one channel (120) radially traversing the hollow shaft and with one end open to the distribution chamber and one end designed to open to an inner ring (104) of the bearing (102).

10. Assembly according to one of claims 1 to 9, wherein the hollow central shaft (100) comprises at least one particle removal chamber (132), having an inside diameter that is greater than the inside diameter of the radially inner wall (107) of the hollow central shaft (100).

11. Assembly according to one of claims 1 to 10 in combination with claim 3, wherein the second section (130) of the lubricant delivery tube (112) comprises a first thread and a second thread which are parallel.

12. Assembly according to one of claims 1 to 11, wherein the lubricant delivery tube (112) is arranged inside the hollow central shaft (100) in a cantilevered manner.

13. Gas turbine comprising an assembly according to one of the preceding claims.

14. Assembly according to claim 1, further **characterized in that** said lubricant delivery tube being arranged to be fixed in longitudinal translation relative to the axis of rotation.
